(19) Europäisches Patentamt
European Patent Office
Office européen des brevets

(11) **EP 3 994 406 B1**

(12) **EUROPÄISCHE PATENTSCHRIFT**

(45) Veröffentlichungstag und Bekanntmachung des Hinweises auf die Patenterteilung:
**04.09.2024 Patentblatt 2024/36**

(21) Anmeldenummer: **20739302.6**

(22) Anmeldetag: **03.07.2020**

(51) Internationale Patentklassifikation (IPC):
**F27B 17/02** *(2006.01)* **G01K 7/25** *(2006.01)*
**A61C 19/00** *(2006.01)*

(52) Gemeinsame Patentklassifikation (CPC):
**F27B 17/025; F27D 99/0006; G01K 7/02;**
**G01K 7/25; F27D 2019/0003; G01K 2217/00**

(86) Internationale Anmeldenummer:
**PCT/EP2020/068901**

(87) Internationale Veröffentlichungsnummer:
**WO 2021/001561 (07.01.2021 Gazette 2021/01)**

(54) **DENTALOFEN**

DENTAL OVEN

FOUR DENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2019 EP 19184350**

(43) Veröffentlichungstag der Anmeldung:
**11.05.2022 Patentblatt 2022/19**

(73) Patentinhaber: **Ivoclar Vivadent AG**
**9494 Schaan (LI)**

(72) Erfinder:
• **JUSSEL, Rudolf**
**6800 Feldkirch (LI)**
• **SCHLEGEL, Manuel**
**8887 Mels (CH)**
• **MÜLLER, Dominik**
**6844 Altach (AT)**

(74) Vertreter: **Baldus, Oliver et al**
**Splanemann Patentanwälte**
**Rumfordstr. 7**
**80469 München (DE)**

(56) Entgegenhaltungen:
**WO-A1-2017/121616 WO-A1-91/08441**
**DE-B3- 102016 206 447 JP-A- 2002 357 484**
**JP-A- H10 104 360 US-A- 3 036 464**
**US-A- 4 106 341**

• **CHAKRAVARTY R K ET AL: "Linearization of thermistor resistance-temperatute characteristics using active circuitry", REV. SCI. INSTRUM,, vol. 48, no. 12, 1 December 1977 (1977-12-01), pages 1645 - 1649, XP001412166**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Dentalofen, gemäß dem Oberbegriff von Anspruch 1, sowie ein Verfahren zum Betrieb eines Dentalofens, gemäß dem Oberbegriff von Anspruch 12.

Zu Dentalöfen gehören sämtliche Vorrichtungen, welche zur Wärmebehandlung von Dentalmaterialien eingesetzt werden. Dies können Wärmebehandlungsprozesse wie das Brennen von dentalen Keramiken sein, die Presstechnik, die Vorwärmung von Pressmuffeln, das Sintern von Keramik oder auch Entbinderungsprozesse wie auch Heisspolymerisationsgeräte.

Dentalöfen werden einerseits als Brennöfen andererseits als Pressöfen in weitem Umfang eingesetzt, um aus einer Dentalkeramik bestehende Dentalrestaurationsteile in die gewünschte Form zu bringen bzw. zu brennen.

Voraussetzung für ein gutes Brennergebnis ist es, dass das vom Hersteller vorge-schriebene Temperaturprofil, die sogenannte Brennkurve, genau eingehalten wird.

Hierzu werden typischerweise in Dentalöfen hochwertige Thermoelemente eingesetzt, die vorab kalibriert werden und die den Temperaturverlauf an der Messstelle mit einer Genauigkeit von einigen Grad und sogar einigen Zehntel Grad erfassen.

Gegenüber der Genauigkeit eines solchen Thermoelements fällt die räumliche Einhaltung der Temperatur deutlich ab. So sind typischerweise innerhalb von Heizräumen die Temperaturgradienten mehrere 10 Grad oder sogar über 100 Grad groß.

Beim schnellen Aufheizen können sogar Temperaturunterschiede von mehr als 200 ° C entstehen.

Dies gilt insbesondere auch für Pressöfen, denn die im Pressofen verwendete Muffel hat im Vergleich mit dem luftgefüllten Heizraum eine erheblich höhere Wärmekapazität, so dass sie sich langsamer aufheizt. Die vom Thermoelement gemessene Temperatur an der Oberfläche der Muffel mag dann zum Beispiel 800° betragen, während der Rohling in der Muffel beispielsweise erst 400° warm ist.

Solchen Messfehlern wird durch recht komplizierte Vorgaben für die Brennkurven der Hersteller Rechnung getragen, die dann auch noch von der Muffelgröße abhängen, so dass ein Brand mit einer 300g-Muffel deutlich anders verläuft als mit einer 100g-Muffel.

Insofern hat die Verwendung eines teuren Thermoelements für die Temperaturerfassung den Nachteil, dass trotz der hohen Eigen-Messgenauigkeit die Temperatur an der relevanten Stelle, also am Brenngut, nicht exakt erfasst werden kann.

Ferner ist es an sich bereits vorgeschlagen worden, die Temperaturmessung über den Widerstandswert des metallischen Heizdrahts vorzunehmen. Typischerweise nimmt der Widerstand eines Heizdrahts mit der Temperatur zu.

Aufgrund der bei Dentalöfen erforderlichen Temperaturbereiche kam eine solche Widerstands-Temperaturmessung bei Dentalöfen nicht in Betracht, hingegen beim Modellieren von Wachs in der Zahntechnik, wobei es bei dem Erwärmen von Wachs deutlich weniger auf die Genauigkeit der Temperatur ankommt.

Insofern sei auf die DE 31 31 217 A1 verwiesen.

Bei einem Dentalofen kann mindestens ein Wandabschnitt der Brennkammer geöffnet werden, um das Brenngut in die Brennkammer einzubringen. Das System ist normalerweise auf den Betrieb bei geschlossener Brennkammer ausgelegt. Es gibt jedoch Prozessschritte, welche bei offenem Wandabschnitt stattfinden (z.B. Vortrocknen bei nassen Restaurationen, Abkühlen). Bei diesen Prozessschritten ist die Information, welche durch das Thermoelement gewonnen werden kann, begrenzt.

Anstelle dessen hat man bei Dentalöfen auch mit Pyrometern gearbeitet, die ebenfalls recht teuer sind und mit welchen die Temperaturen des Brennguts aus der Ferne erfasst werden sollten.

Teilweise sind insofern sogar mehrere Pyrometer pro Dentalofen vorgeschlagen worden, mit entsprechenden Kostennachteilen.

Aus DE 10 2016 206 447 A1 ist ebenfalls ein Dentalofen bekannt, der den Gleichstrom des dortigen Induktionsofens im dortigen Netzteil überwacht und für die Leistungsberechnung heranzieht. Eine verlässliche Temperaturüberwachung ist so nicht möglich. Vielmehr wird ein spezielles Kalibrierverfahren mit einem zusätzlich vorgesehenen Kalibrierkörper mit mindestens 2 Messmaterialien eingesetzt. Deren Phasenübergangstemperatur wird erfasst, und Abweichungen werden als Korrekturwert eingesetzt. Diese Lösung ist dementsprechend sehr aufwändig, und erfordert eine sorgfältige Handhabung, die Identifikation der ggf. mehreren Kalibirekörper, deren Positionierung im Ofenraum, und die richtigen Eingaben in die Steuervorrichtung umfasst. Eine unmittelbare Ofensteuerung ist nicht möglich, da die Kalibierkörper für das Brennprogramm entfernt werden.

Demgegenüber liegt der Erfindung die Aufgabe zu Grunde, einen Dentalofen gemäß dem Oberbegriff von Anspruch 1 zu schaffen, der hinsichtlich des Abfahrens des Temperaturprofils verbessert ist, wobei sich zudem Kostenvorteile oder zumindest kein Kostennachteil ergeben soll.

Diese Aufgabe wird erfindungsgemäß durch Anspruch 1 gelöst. Vorteilhafte Weiterbildungen ergeben sich aus den Unteransprüchen.

Während eine Temperaturerfassung über den Widerstand eines Heizelements an sich bekannt ist, ist es erfindungsgemäß vorgesehen, dass die Temperaturerfassung eines Dentalofens über einen Parameter des Heizelements, insbesondere dessen Widerstand, lediglich als Grundlage zu verwenden und Heizungssteuerung über eine Kompensationsvorrichtung zu realisieren. Als Parameter kann anstelle des Widerstands auch eine Widerstandsänderung, also die Ableitung des Widerstands, verwendet werden. Auch eine Kombination von Widerstand und Widerstandsänderung kann als Parameter verwendet werden.

Die Kompensationsvorrichtung berücksichtigt in erster Linie Nichtlinearitäten der physikalischen Parameter des Heizelements als Temperaturerfassungsvorrichtung, wobei diese Nichtlinearitäten die Widerstandszunahme bei Temperaturzunahme betreffen. Die Widerstandszunahme und die Temperaturzunahme sind typischerweise nicht proportional zueinander, sondern nichtlinear. Die Abweichung von der Proportionalität zwischen Temperatur und Widerstand des Heizelement wird als Nichtlinearität des Heizelements bezeichnet.

Die Kompensationsvorrichtung berücksichtigt die Nichtlinearitäten und ggf. auch die Eigenheiten des Ofens selbst, wie beispielsweise die geometrische Anordnung von Heizelementen, die Dynamik des abzufahrenden Brennzyklus, Starttemperatur bzw. Durchwärmung des Ofens bei Prozessstart, aber auf die Alterung der Heizelemente und/oder die Alterung deren Anschlüsse.

Betrachtet man die erste Ableitung der Widerstandszunahme zur Temperaturzunahme, also insofern Delta R/Delta T, ist das Differential bei der Verwendung von Siliziumcarbid als Heizelement zu nächst negativ und dann positiv, und bei der Verwendung von Molybdänsilizit positiv. Bei der Verwendung von FeCrAl- resp. FeCrNi-Verbindungen ist das Differential unterschiedlich, leicht positiv.

Besonders günstig ist es, wenn Nichtlinearitäten bei Temperaturen oberhalb von 400 Grad C erfasst und kompensiert werden. Dieser Temperaturbereich ist bei Brennvorgängen in der Dentaltechnik, zu denen hier auch das Vorwärmen gerechnet wird, relevant.

Die Kompensationsvorrichtung ist bevorzugt aber nicht hierauf beschränkt. Die Kompensationsvorrichtung soll vorteilhafterweise auch die Totzeit bei der Erwärmung des Brennguts, also der Dentalrestaurationsteile, basierend auf Ofenparametern berücksichtigen, also auch zeitliche Komponenten berücksichtigen.

Um dies zu erreichen, wird bevorzugt zunächst eine Kalibration durchgeführt, und die ermittelten Werte werden in der Kompensationsvorrichtung der Temperaturerfassungsvorrichtung abgespeichert.

Die Heizungssteuerung steuert den Dentalofen basierend sowohl auf dem erfassten Parameter des Heizelements, z.B. basierend auf dem Widerstand, als auch basierend auf der Kompensationsvorrichtung. "Basierend" ist hier nicht ausschließend zu verstehen; vielmehr können auch weitere Messgrößen der Heizungssteuerung zugeleitet werden, diese werden dann ebenfalls für die Steuerung und Regelung des Dentalofens verwendet.

Zu diesen Messgrößen kann das Ausgangssignal eines Temperaturfühlers gehören, z.B. eines Thermoelements.

Erfindungsgemäß und überraschend lässt sich mit dieser Maßnahme eine ausreichend genaue, aber preiswerte Temperatursteuerung realisieren, da es nicht oder unbedingt erforderlich ist, ein teures Thermoelement, oder gar ein Pyrometer, für den erfindungsgemäßen Dentalofen einzusetzen.

Es ist vielmehr auch möglich, eine preisgünstiges, da edelmetallfreies Thermoelement einzusetzen. Dieses kann außerhalb der - heißen - Brennkammer, die hier auch als Heizraum bezeichnet ist, angebracht sein, z.B. in der Wärmedämmung.

Bei Bedarf kann insofern ein Thermoelement und/oder ein Pyrometer zusätzlich als Sensor für die Ofentemperatur eingesetzt werden. Die Regelung kann dann basierend sowohl auf den Ausgangssignalen von Pyrometer und/oder Thermoelement als auch dem Widerstand des Heizelements oder dessen Änderung erfolgen.

Es ist möglich, Pyrometer und/oder Thermoelement entnehmbar in dem Dentalofen anzubringen. Diese können für die Kalibrierung verwendet werden, oder auch als zusätzliche Temperaturfühler, wenn Redundanz zur Erhöhung der Regelsicherheit erwünscht ist.

Es besteht dann die Möglichkeit, ein preisgünstiges Thermoelement (Typ N oder Typ K) in der Wärmedämmung oder an der Aussenhaut oder an den Anschlüssen für zusätzliche Informationen anzubringen, um die Prozesssicherheit, resp. Genauigkeit oder Robustheit weiter zu erhöhen. Die Kosten für ein derartiges Thermoelement betragen etwa die Hälfte derjenigen der Ofen-Thermoelemente gemäß dem Stand der Technik.

Die Kombination der erfindungsgemäßen, kompensierten Heizelelemt-Widerstandserfassung mit einem preisgünstigen Thermoelement ermöglicht es, Regel-Überschwinger zu verhindern.

Erfindungsgemäß ist es ferner möglich, die Überlastung der Heizelemente zu verhindern.

Heizelemente haben eine Maximaltemperatur bzw. maximale Obeflächenlasten bei verschiedenen Temperaturen, welche nicht überschritten werden darf/dürfen.

Durch die Überwachung der elektrischen Eigenschaften der Heizelemente und der abgegebenen Leistung kann sichergestellt werden, dass diese Maxima nicht überschritten werden. Dies ist besonders bei Dentalöfen mit einer schneller Aufheizrate wichtig.

Bevorzugt ist es bei einem erfindungsgemäßen Dentalofen vorgesehen, dass das Heizelement Teil einer Heizvorrichtung ist, die den Heizraum heizt.

Besonders vorteilhaft ist die erfindungsgemäße Temperatursteuerung in der Situation, wenn Thermoelement und Heizelement beim Öffnen des Wandabschnittes nicht zusammen sind. Diese Situation kann bei der Vortrocknungsphase und/oder beim Abkühlen auftreten.

Erfindungsgemäß ist es besonders günstig, dass bei den verwendeten Materialien der Bereich, in dem die Nichtlinearität am geringsten ist, besonders nah am Verwendungsbereich liegt. In diesem Verwendungsbereich ist die Abweichung von der Proportionalität recht gering, z.B. weniger als 5%. Dennoch wird erfindungsgemäß die Genauigkeit der Temperaturerfassung mittels der Kompensationsvorrichtung nochmals erhöht.

In vorteilhafter Ausgestaltung ist der erfindungsgemäße Dentalofen als Vortrocknungsofen ausgebildet und arbeitet insofern im Bereich zwischen 80° und 1000°, bevorzugt zwischen 700° und 800°.

Dieser Bereich ist ein Bereich, in dem die Nichtlinearität, also die Abweichung von der Proportionalität, bei etwa 3% pro 50° liegt, also nicht wesentlich verschieden ist von den aufsummierten Messfehlern.

Zudem ist die Nichtlinearität positiv, also nimmt der Widerstand um etwa 3% mehr zu als es bei einem linearen Verhältnis zwischen Widerstandszunahme und Temperaturzunahme zu erwarten wäre.

Im Hinblick auf diese vergleichsweise einfache Ausgangssituation ist es auch möglich, über eine so genannte Lookup-Tabelle, also in digitaler Form, die Kompensationsvorrichtung zu realisieren.

Die Art der Realisierung hängt stark von dem abzudeckenden Temperaturbereich ab; wenn der erfindungsgemäße Dentalofen als Hochtemperatur-Brennofen realisiert ist, empfiehlt sich jedenfalls eine Lookup-Tabelle als Basis für die Kompensationsvorrichtung. Alternativ kann auch durch Ausmessen des Ofens eine Korrekturfunktion bzw. ein Modell als Basis für die Kompensationsvorrichtung erstellt werden.

Erfindungsgemäß ist es jedenfalls vorgesehen, dass die Heizungssteuerung basierend auf dem Widerstand des Heizelements zum einen und basierend auf der Kompensationsvorrichtung zum anderen den Dentalofen steuert und damit insofern einen Regelkreis bildet.

Allenfalls kann in den Regelkreis auch noch ein Thermoelement involviert sein. Die Kompensationsvorrichtung kann auch die Temperaturverteilung entlang der Längserstreckung des Heizelementes o.ä. umfassen.

Bei Bedarf kann der hier beschriebene Heizungsregelkreis separat ausgeführt sein und zusätzlich ein - bevorzugt innerer - Regelkreis für eine Strom-Spannungs-Regelung realisiert sein. Dieser Regelkreis kann beispielsweise als Steuerelement in Form einer preisgünstigen integrierten Schaltung realisiert sein, die dann an den Eingang eines Leistungshalbleiters angeschlossen ist.

Erfindungsgemäß ist ein Verfahren zum Betrieb eines Dentalofens mit mindestens einem elektrischen Heizelement, das sich benachbart einem Heizraum erstreckt und von einer Heizungssteuerung angesteuert wird, vorgesehen. Die Heizungssteuerung regelt die Temperatur in dem Heizraum und weist eine Temperaturerfassungsvorrichtung auf. Die Temperaturerfassungsvorrichtung erfasst den Widerstand mindestens eines Teiles mindestens eines Heizelementes und weist eine Kompensationsvorrichtung aufweist, In der Kompensationsvorrichtung werden Abweichungen von der Proportionalität der Widerstandzunahme des Heizelements mit der Temperaturzunahme des Heizelements, also Nichtlinearitäten, abgespeichert.

Die Heizungssteuerung steuert erfindungsgemäß die Temperatur des Dentalofens basierend auf dem erfassten Widerstand mindestens eines Teiles mindestens eines Heizelementes und basierend auf der Kompensationsvorrichtung (50) steuert. Bei mehreren Heizelement wird die Erfassung abwechselnd vorgenommen, und das betreffende, gemessene Heizelement wird hierzu kurz (heiz-)stromlos geschaltet. Es wird ein Messtrom eingeprägt, und der Spannungsabfall gemessen, oder es wird eine Messspannung angelegt, und es wird der das heizelement durchfließenden Strom gemessen.

In beiden Fällen wird das das Messergebnis der Temperaturerfassungsvorrichtung zugeleitet. Die Kompensationsvorrichtung erzeugt aus dem nackten Messergebnis einen Wert, der der tatsächlichen Temperatur des heizstromlosen Heizelements - und damit im wesentlichen des Ofeninnenraums - entspricht. Dieser Wert wird für die Heizungssteuerung verwendet.

Bevorzugt ist es bei einem erfindungsgemäßen Dentalofen vorgesehen, dass die Temperaturerfassungsvorrichtung die gemessenen Widerstandswerte des Heizelements und damit indirekt die Temperaturwerte im Heizraum fortlaufend abspeichert und damit ein Temperaturprofil des aktuellen Brennvorgangs über die Zeit fortlaufend erfasst.

In vorteilhafter Ausgestaltung der Erfindung ist es vorgesehen, , dass die Temperaturerfassungsvorrichtung zur Ermittlung des Widerstands oder entsprechender physikalischer Parameter einen Strom, insbesondere einen Gleichstrom, durch das Heizelement leitet und den Spannungsabfall an diesem misst.

In vorteilhafter Ausgestaltung der Erfindung ist es vorgesehen, t, dass die Temperaturerfassungsvorrichtung zur Ermittlung des Widerstands oder entsprechender physikalischer Parameter eine Spannung, insbesondere eine Gleichspannung, an das Heizelement anlegt und den durch dieses fließenden Strom misst.

In vorteilhafter Ausgestaltung der Erfindung ist es vorgesehen, , dass die Heizungssteuerung die Temperaturerfassungsvorrichtung in einen Regelkreis einbezieht, der basierend auf einem einem Temperaturwert entsprechenden, gemessenen Widerstandswert die Temperatur im Heizraum steuert.

Bevorzugt ist es bei einem erfindungsgemäßen Dentalofen vorgesehen, dass die Heizungssteuerung das Temperaturprofil, das dem Integral über den Temperaturverlauf entspricht, laufend überwacht. Vorzugsweise dient das Temperaturprofil als Stellgröße im Regelkreis der Heizungssteuerung. >Zur Anpassung an die in Dentalrestaurationsteile einzubringende Soll-Wärmemenge wird basierend auf diesem Regelkreis die Heizraumtemperatru eingestellt.

Die erfindungsgemäß bevorzugten Materialien des oder der Heizelemente können als metallkeramische Heizelemente bezeichnet werden. Diese Heizelemente haben einen vergleichsweise geringen Widerstand, insbesondere gilt dies bei Verwendung von Molybdänsilizit.

Während der Innenwiderstand eines Heizelements aus Kanthal-Draht beispielsweise 50 Ohm betragen kann, kann dieser bei einem Heizelement aus MoSi 0,02 Ohm betragen, so dass insofern ein Unterschied des Innenwiderstands um mindestens zwei Zehnerpotenzen besteht. Diesem wird durch entsprechende Wahl der Eingangsspannung bzw. des Eingangsstroms Rechnung getragen, oder beispielsweise, indem bei MoSi-Heizelementen eine Reihenschaltung (oder ggf. doch eine Parallelschaltung) realisiert wird.

Bevorzugt ist es bei einem erfindungsgemäßen Dentalofen vorgesehen, dass die Temperaturerfassungsvorrichtung als Messpannung eine Wechselspannung mit einem besonderen Wechselspannungsprofil abgibt, das sich von einer Sinuswelle unterscheidet. Dies hat den Vorteil, dass durch die besondere Form und/oder Frequenz der Messpannung Störimpulse und Störfrequenzen leicht ausfilterbar sind.

Bevorzugt ist es bei einem erfindungsgemäßen Dentalofen vorgesehen, dass die Temperaturerfassungsvorrichtung Messanschlüsse aufweist, die im Betrieb im heißen Bereich des Heizelements liegen, und welche undurchflossen von Heizstrom sind.

Das erfindungsgemäß hier so bezeichnete Heizelement ist dasjenige, das für die Temperaturerfassung verwendet wird.

Der einfachste, günstigste und vorteilhafteste Fall ist, wenn Heizstrom = Messstrom. Damit ist ein zusätzlicher Messanschluss hinfällig und nicht erforderlich.

In einer weiteren Ausgestaltung weist das Heizelement einen Messanschluss auf, der im Bereich des Heizelementes liegt, das im Betrieb heiß wird. Es können auch zwei entsprechende, von einander beabstandete Messanschlüsse an dem Hezelement realisiert sein, zwischen denen das Heizelement im Betrieb heiß ist. Diese Lösung hat den Vorteil, dass stets nur der betreffende heiße Bereich des Heizelelements in die Messung mit einbezogen wird.

Diese Lösung ist bei Vorwärmöfen mit den entsprechend geringeren Temperaturen bevorzugt, während bei Hochtemperatur-Brennöfen aufgrund der ansonsten bestehenden Probleme die Messanschlüsse im kalten Bereich des Heizelements vorgesehen sind und der kalte Abschnitt des Heizelements dann in der Kompensationsvorrichtung berücksichtigt wird.

Erfindungsgemäß ist es günstig, wenn die Heizvorrichtung mehrere Heizelemente aufweist, von denen eines als Mess-Heizelement zur Heizung und für die Temperaturerfassung verwendet wird und die anderen rein zur Abgabe von Heizenergie dienen. Dies vereinfacht und reduziert den schaltungstechnischen Aufwand für die erfindungsgemäße Temperaturerfassung.

Auch wenn hier die Messung des Widerstands als erfinderisch auszunutzende Maßnahme herausgestellt ist, versteht es sich, dass beliebige andere elektrische Parameter des Heizelements in die Messung einbezogen werden können; auch diese Parameter seien hier unter dem Begriff "Widerstand" subsumiert. Insbesondere gehört zu dem Widerstand nicht nur der ohmsche Widerstand, sondern auch Scheinwiderstände wie induktive und/oder kapazitive Widerstände, aber auch weitere physikalisch-elektrische Parameter.

Der Widerstand muss nicht explizit gemessen werden. Es ist auch möglich, andere Inputs z.B. Leistungsstellerdaten (Wirkungsgrad o.ä.) zu verwenden. Dieser Input muss mit dem Widerstand der Heizelemente korrelieren.

Dadurch, dass Spannung und Strom als Eingangsgrössen zur Verfügung stehen, kann sowohl der Heizelement-Widerstand, welcher mit der Heizelement-Temperatur korreliert, als auch die abgegebene Heizleistung kalkuliert werden.

Besonders günstig ist die Messung des Heizelement-Widerstands insbesondere dann, wenn gerade nicht aktiv geheizt wird.

Wird von den Heizelementen keine oder nur eine sehr geringe Leistung abgegeben, dann homogenisiert sich die Temperatur in der Brennkammer, d.h. die Heizelementtemperatur entspricht im Optimalfall der Temperatur an jedem anderen Ort in der Brennkammer.

Wird in diesem Zustand ein kleiner "Messtrom" auf die Heizelemente gegeben, welcher nur eine sehr kleine Heizleistung bewirkt, aber die Messung des Widerstandes erlaubt, so lässt sich dadurch direkt die Temperatur in der Brennkammer abschätzen.

Es können auch bewusst "Heizpausen" eingeführt werden, um den Effekt der Temperaturüberhöhung der Heizelemente auszuschliessen.

In weitere vorteilhafter Ausgestaltung ist eine periodische Abschaltung von Heizelementen vorgesehen.

Wenn mehrere Heizelemente in einem Ofen verbaut sind und diese einzeln ansteuerbar sind, kann auch im Heizprozess jeweils für kurze Zeit der Heizstrom für ein einzelnes Heizelement abgeschaltet werden und dieses nur mit einer "Messleistung" beaufschlagt werden, um so dessen Widerstand im passiven Zustand zu ermitteln. Danach kann das nächste Heizelement abgeschaltet und auf "messen" gestellt werden, u.s.w.

Dadurch lässt sich nicht nur eine etwaige durch die aktive Heizung des Heizelementes auftretende "Überhitzung" des Heizelements bei der Messung eliminieren, sondern es lässt sich auch eine Information über die Homogenität der Heizung in der Brennkammer gewinnen.

Besonders günstig lässt sich der erfindungsgemäße Dentalofen und das zugehörige Verfahren in speziellen Phasen des Gesamtprozesses einsetzen, insbesondere beim Vortrocknen.

Sobald ein Wandabschnitt der Brennkammer, also des Heizraumes, geöffnet ist, verändert sich das Heizverhalten bzw. die Verteilung und der Verlauf der Energieeinbringung stark.

Beim Stand der Technik lässt sich je nach Position des Temperatursensors und Bauart des Ofens der Messwert des Temperatursensors dabei nicht mehr sinnvoll verwenden, um die Temperatur bzw. den Verlauf der Energieeinbringung ins Objekt zu kontrollieren. Dies ist im Speziellen beim Vortrocknen in einem Ofen mit beweglichem Thermoelement und/oder mit einem beweglichen Brennkammerboden der Fall.

Insofern wird auf den Dentalofen Bezug genommen, der in der EP 3 338 767 A1 beschrieben ist; auf diese Druckschrift wird hier vollinhaltlich Bezug genommen.

Typischerweise ist in so einem Fall eine weniger genaue Prozesskontrolle nötig als im Sinter- oder Kristallisationsprozess.

In diesem Falle kann die Prozesskontrolle alleine über die Messung der elektrischen Eigenschaften der Heizelemente erfolgen. Dabei kann dann auf einen bestimmten Heizelement-Widerstand als Sollwert geregelt, und nicht auf eine Temperatur. Dadurch wird der Prozess auch ohne Temperatursensor reproduzierbar.

Auch weitere Anwendungsfälle der Prozesskontrolle sind über die elektrischen Eigenschaften der Heizelemente möglich.

Hierzu gehört die Kontrolle des Einfahrbrandes oder Regenerationsbrandes.

MoSi-Heizelemente bedürfen vor der Anwendung im Dentalofen eines Einfahrbrandes, welcher dazu dient, die $SiO_2$-Schutzschicht auf den Heizelementen homogen aufzubauen. Wird dieser Einfahrbrand gemäß dem Stand der Technik über den verbauten Temperatursensor kontrolliert, so ist die aktuelle Temperatur der Heizelemente immer unbekannt, da diese immer grösser ist als die Temperatur, welche durch den Sensor gemessen wird.

Um dies zu umgehen, könnten Sensoren in unmittelbarer Umgebung der Heizelemente eingebaut werden. Dies wäre ein Zusatzaufwand .

Mit der erfindungsgemäßen Lösung kann der Einfahrbrand über die elektrischen Eigenschaften der Heizelemente kontrolliert werden, d.h. es wird auf ein Zeit-Wiederstandsprofil geregelt.

Unter der Voraussetzung, dass alle Heizelemente gleich sind, kann so ein für die Heizelemente exakt definiertes Profil abgefahren werden, (fast) unabhängig vom verwendeten Ofen(typen). Dasselbe gilt für den Regenerationsbrand.

Neben dem positiven Effekt, dass die Kontrolle dieser Brände genauer wird, kann auch der Entwicklungsaufwand reduziert werden, da bei der Entwicklung eines neuen Ofens der bereits existierende Einfahr - und Regenerationsbrand 1:1 übernommen werden kann.

Eine weitere erfindungsgemäße Möglichkeit ist die Überprüfung der Brennkammer, insbesondere der Heizelemente und der Anschlusstechnik.

Durch die Messung der elektrischen Eigenschaften der Heizelemente kann der Zustand der Heizelemente bzw. der Anschlusstechnik automatisch überprüft werden.

Auch die Anschlusstechnik ist im Messkreis, so dass Fehlfunktionen erfasst werden.

Wird bei verschiedenen Durchläufen des gleichen Heizprofils der Heizelementwiderstand aufgenommen, so kann nachstehendes berücksichtigt werden: Entsteht eine Veränderung des Widerstandsprofils, kann die Notwendigkeit eine Wartung ermittelt werden:

Bei MoSi-Heizelementen bleiben die Widerstände der Heizelemente konstant. Das bedeutet, dass bei einer Veränderung des Widerstandsprofils kann auf Defekte bzw. Alterung der Anschlusstechnik geschlossen werden.

Bei SiC-Heizelementen verändert sich der Widerstand der Heizelemente durch die Alterung.

Entsprechend kann bei beiden Typen von Heizelementen ein nötiger Service vorhergesehen werden, bzw. allfällige Anpassungen im Ansteuerprofil vorgenommen werden, um gleichbleibende Heizeprofile zu garantieren.

Der Widerstand der Anschlüsse der Heizelemente nimmt mit der Lebensdauer oder auch durch Transportvorgänge zu. In die Widerstandsmessung - sofern das ganze Heizelement einbezogen wird - fließen diese Anschlusswiderstände ein. Dadurch wird die Regelung/Messung der Temperatur aufgrund des Heizelementwiderstandes mit der Zeit falsch.

In einer besonderen Ausgestaltung der Erfindung gemäß Anspruch 15 ist ein Offset vorgesehen, der - insbesondere je den aktuellen - Übergangswiderstand der Anschlüsse kompensiert.

Diese Kompensierung kann als Teil der erfindungsgemäßen Kompensationsvorrichtung realisiert sein.

Der Widerstands-Offset wird dadurch bestimmt, dass ein spezielles Programm durchgeführt wird und die gemessenen Heizelementwiderstandswerte mit den im neuen Gerät im gleichen Programm gemessenen Heizelementwiderstandswerten verglichen werden.

Die Kompensationsvorrichtung wird dadurch um eine Funktion erweitert, nämlich um die Kompensation der Alterung.

Durch die Kompensation der Alterung kann die Genauigkeit der Regelung/Messung der Temperatur aufgrund des Heizelementwiderstandes über die Lebensdauer deutlich gesteigert werden.

Alternativ kann die Kurve auch in Richtung der X-Achse kompensiert werden, d.h. es kann ein Temperaturoffset anstatt eines Widerstandsoffsets eingeführt werden. Besonders günstig ist ferner die Möglichkeit der Überprüfung des Zustandes der Brennkammer.

Durch einen kurzen Messimpuls und einer Aufnahme des Widerstandes der Heizelemente kann zu jedem Zeitpunkt und in jeder Position der thermische Zustand der Brennkammer resp. der unmittelbaren Umgebung der Heizelemente überprüft werden. Dies ist insbesondere bei einem Ofen mit beweglichem Thermoelement und/oder mit einem beweglichen Brennraumboden von Bedeutung.

Wenn das Thermoelement in seiner Position verändert wird oder ganz aus dem Heizraum entfernt wird, ist keine Messung mehr möglich.

Wenn der Brennraumboden nach oben durch den Heizraum in eine Presenterposition gemäß der EP 3 338 767 A1 verfahren wird, ist dort im offenen Zustand keine Information zur Temperatur in der Brennkammer verfügbar. Das Thermoelement, das sich durch den Deckel erstreckt, wird mit nach oben verfahren und befindet sich dann deutlich oberhalb der Brennkammer.

Durch die Überprüfung des Widerstandes der Heizelemente kann dann entschieden werden, ob die Bedingungen für den Start eines neuen Programms bereits erfüllt sind.

In einer weiteren vorteilhaften Ausgestaltung gemäß Anspruch 13 und 14 ist ein Verfahren vorgesehen, bei dem vorab ein Grenzwert für die Temperatur des Dentalofens festgelegt wird, bei welcher ein Brennprogramm gestartet werden kann. Die aktuelle Temperatur des Heizelements gemäß der Temperaturerfassungsvorrichtung wird von der Heizungssteuerung mit der Grenztemperatur verglichen und das Brennprogramm wird gestartet wird, wenn der Grenzwert erreicht ist.

Die Überwachung der Brennkammertemperatur auch dann, wenn kein Brennprogramm stattfindet, ist wichtig.

Die erreichte Temperatur und damit das Brennergebnis eines Ofens ist nämlich davon abhängig wie stark durchwärmt der Ofen beim Start eines Brennprogramms ist. Aus diesem Grunde wird bevorzugt ein Grenzwert für die Temperatur des Ofens festgelegt, bei welchem ein Brennprogramm gestartet werden kann. Je nach Öffnungsmechanismus des Ofens, kann das Thermoelement im offenen Zustand des Ofens (wenn die Bestückung des Ofens vorgenommen wird und der Kunde dann START drückt) die Temperatur im Ofen nicht messen, da es sich ausserhalb der Brennkammer befindet.

Zur Lösung des Problems wird der Widerstand der Heizelemente dazu verwendet, abzuschätzen, wie heiss die Brennkammer noch ist. Es wird eine Wiederstarttemperatur festgelegt, unter welcher ein Brennprogramm gestartet werden kann. Es werden regelmässig kurze Stromimpulse (von z.B. 15A) durch die Heizelemente gesendet, wobei die Einschaltzeit weniger als 10% ausmachen soll.

Dadurch ist die durchschnittliche Leistung während der Überwachung < 5W und beeinflusst die Abkühlung des Ofens kaum. Mit diesen Stromimpulsen wird der Widerstand der Heizelemente gemessen und damit die aktuelle Heizelementtemperatur abgeschätzt.

Zusätzlich werden auch die Lüfter aufgrund der per Widerstandsmessung ermittelten Heizelementtemperaturen gesteuert, d.h. wenn die Temperatur einen Wert unterschreitet werden die Lüfter abgeschaltet.

Hier ein Beispiel für die Temperaturmessung per Heizelementwiderstand:

Nach Beendigung des aktiven Brennprozesses wird alle lmin ein Stromimpuls von 3s eingeprägt, um den Widerstand der Heizelemente und so die Temperatur in der Kammer zu messen. Während der Ofen eine definierte Schwelltemperatur noch nicht unterschritten hat sind die Lüfter zur Kühlung eingestellt und es kann kein neues Programm gestartet werden.

Weitere Vorteile, Einzelheiten und Merkmale ergeben sich aus der nachfolgenden Beschreibung mehrerer Ausführungsformen der Erfindung anhand der Zeichnung.

Es zeigen:

Fig. 1     eine schematische Darstellung eines erfindungsgemäßen Dentalofens, unter Darstellung der für die Erfindung wesentlichen Bestandteile;

Fig. 2     die Widerstands-/Temperaturkennlinie eines MoSi- Heizelements eines erfindungsgemäßen Dentalofens in einer Ausführungsform;

Fig. 3     eine weitere Widerstands-/Temperaturkennlinie in normierter Form;

Fig. 4     einen typischen Regelkreis einer Temperaturregelung eines Dentalofens gemäß dem Stand der Technik;

Fig. 5     eine Ausführungsform der Erfindung unter Darstellung eines erfindungsgemäßen Regelkreises, wobei bei dieser Ausführungsform kein Thermoelement verwendet wird;

Fig. 6    eine Ausführungsform der Erfindung unter Darstellung eines erfindungsgemäßen Regelkreises, wobei bei dieser Ausführungsform ein Thermoelement verwendet wird;

Fig. 7    ein Regelschema als Teil des Regelkreises, zur Darstellung des Zusammenwirkens der Kompensationsvorrichtung bei der Temperaturerfassung;

Fig. 8    ein Diagramm zur Darstellung eingeprägter Messstromimpulse und des je gemessenen Widerstandswerte bei fortschreitender Abkühlung;

Fig. 9    ein Diagramm zur Darstellung des gemessenen Heizelementwiderstands, zum einen in neuem und zum anderen in gebrauchtem Zustand; und

Fig. 10    die beiden Kurven gemäß Fig. 8 nach Kompensation mittels Offsets.

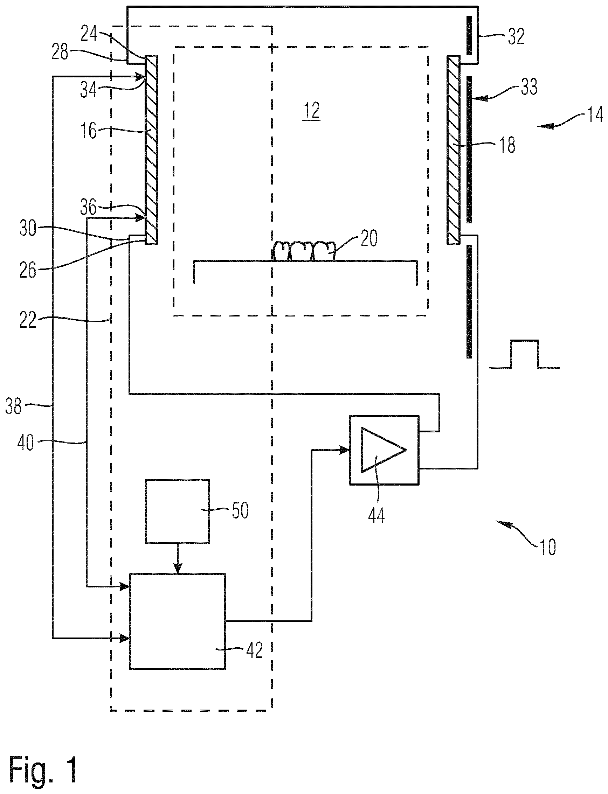

Aus Fig. 1 ist ein Dentalofen 10 mit seinen für die Erfindung relevanten Teilen schematisch ersichtlich.

Hierzu gehört ein Heizraum 12, der von einer Heizvorrichtung 14 beheizbar ist. Die Heizvorrichtung 14 besteht aus mehreren Heizelementen, von denen aus Fig. 1 die Heizelemente 16 und 18 ersichtlich sind. Die Heizelemente erstrecken sich ringförmig um den Heizraum 12.

Der Heizraum 12 ist für die Aufnahme von Dentalrestaurationsteilen 20 bestimmt, die in Fig. 1 schematisch dargestellt sind. Auch wenn hier der Dentalofen 10 als Brennofen ausgebildet ist, versteht es sich, dass anstelle dessen auch ein Pressofen mit einer Muffel erfindungsgemäß ausgebildet sein kann, oder ein Sinterofen, ein Kristallisationsofen, ein Vorwärmeofen, eine Vortrocknungseinrichtung, ein Entbinderungsofen oder ein Heisspolymerisationsofen.

Der dargestellte Dentalofen 10 ist multifunktional, lässt sich also sowohl als Vorwärmofen mit Temperaturen um 800°, aber auch als Hochtemperatur-Sinterofen mit Temperaturen um 1800° einsetzen. Dementsprechend sind die Heizelemente temperaturfest. Im dargestellten Ausführungsbeispiel bestehen sie aus SiC.

In dem dargestellten Ausführungsbeispiel ist das Heizelement 16 Teil einer Temperaturerfassungsvorrichtung 22. Es weist Heizstromanschlüsse 24 und 26 auf, die an dem Heizelement 16 angebracht sind, und zwar an zwei voneinander beabstandeten Stellen. Das Heizelement wird durchflossen von dem Heizstrom, der auch weitere Heizelemente wie zum Beispiel das Heizelement 18 durchfließt.

Im dargestellten Ausführungsbeispiel durchtritt die Heizstromleitung je eine Durchführung 28 bzw. 30, an welcher die Heizstromleitung 32 eine nicht dargestellte Wärmedämmung des Ofens durchtritt.

Durch den Heizstrom entsteht ein Spannungsabfall an dem Heizelement, und das Heizelement heizt sich auf und beheizt damit auch den Heizraum 12.

Im dargestellten Ausführungsbeispiel sind zusätzlich zu dem Heizstromanschlüssen 24 und 26 an dem Heizelement 16 ein Messstromanschluss 34 nahe dem Heizstromanschluss 24 und ein Messstromanschluss 36 nahe dem Heizstromanschluss 26 an dem Heizelement angebracht. Die betreffenden Messleitungen 38 und 40 können durch die Durchführungen 28 und 30 mit hindurch geführt werden.

Diese Ausführungsform hat den Vorteil, dass die Änderung des Innenwiderstands des Heizelements 16 nur im Bereich des Heizraums 12 vollständig in den Messstrom einfließt.

Die Temperaturerfassungsvorrichtung 22 weist eine Steuervorrichtung 42 auf. Die Steuervorrichtung 42 hat einen Ausgangsanschluss, der mit der Heizungssteuerung 44 verbunden ist und diese und damit den Heizstrom in der Heizstromleitung 32 steuert und regelt.

Die Steuervorrichtung 42 stellt auch den Messstrom in den Messleitungen 38 und 40 bereit. Es wird der Spannungsabfall über das Heizelement gemessen. Bevorzugt ist das Heizelement 16 als Messwiderstand in eine an sich bekannte Widerstandsmessbrücke eingebunden.

Es ist auch möglich, den Heizstromanschluss 24 und den Messstromanschluss 34, und entsprechend den Heizstromanschluss 26 und den Messstromanschluss 36 je in einem Anschluss zusammen zu fassen. Ein Teil des vom Heizstrom durchflossenen Bereichs der Heizstromleitung ist dann jedoch kalt und trägt insofern nichts zum Messergebnis bei.

Bevorzugt sind die Messleitungen 38 und 40 ausgesprochen niederohmig und die Messstromanschlüsse 34 und 36 haben einen sehr geringen Übergangswiderstand zum Heizelement 16.

Der Messstrom im Messkreis ist so gewählt, dass er die aktuelle Temperatur des Heizelements nicht oder nicht messbar beeinflusst, also das Heizelement nicht weiter erwärmt. Beispielsweise kann der Messstrom 5 mA betragen, und die Messspannung 20 mV, entsprechend einem Innenwiderstand des aus SiC bestehenden Heizelements 16 von 4 Ohm.

Das Heizelement 16 ist Teil der Temperaturerfassungsvorrichtung 22 und dient als Messwiderstand. Es bildet dem Grunde nach die Temperatur während des Heizens ab, und zwar die Temperatur des Heizelements 16.

Die Temperatur des Dentalrestaurationsteils 20 ist typischerweise deutlich geringer als die des Heizelements 16, zumindest während der Temperaturänderung.

Außerdem nimmt der Innenwiderstand des Heizelements 16 mit zunehmender Temperatur zu, aber nicht exakt proportional, sondern nichtlinear.

Die Ansteuerung der Heizungssteuerung erfolgt nun so, dass grundsätzlich der gemessene Widerstand des Heizelements 16 als Basis für die Regelung verwendet wird. Darüber hinaus wird allerdings auch das Ausgangssignal einer Kompensationsvorrichtung 50 berücksichtigt, die ebenfalls Teil der Temperaturerfassungsvorrichtung 22 ist.

Die Kompensationsvorrichtung 50 kompensiert die Nichtlinearität des Heizelements 16. Diese letztere ist materialabhängig und an sich bekannt. Bei Bedarf kann eine Messkurve des aktuell verwendeten Heizelements für die Kalibrierung durchgefahren und abgespeichert werden, so dass die Nichtlinearitäten ofenspezifisch in der Kompensationsvorrichtung abgelegt sind und die Steuervorrichtung 22 insofern die exakte Temperatur des Heizelements 16 ermitteln kann.

Ferner ist es auch möglich, den Temperaturgradienten bei der Aufheizung rechnerisch zu berücksichtigen, ebenfalls in der Temperaturerfassungsvorrichtung 22, insbesondere in der Kompensationsvorrichtung 50. Ein großer Temperaturgradient wie zum Beispiel 50° pro Minute oder gar 80° pro Minute führt zu einer großen Temperaturdifferenz zwischen dem Dentalrestaurationsteil 20 und dem Heizelement 16.

Wenn das Heizelement 16 auf einer konstanten Temperatur gehalten wird, basierend auf der Regelung durch die Temperaturerfassungsvorrichtung 22, bedeutet dies anschließend an eine Periode raschen Aufheizens noch nicht, dass die Temperaturdifferenz, also der örtliche Temperaturgradient im Heizraum 12 auf Null fällt; dies erfolgt lediglich allmählich, basierend auf der Wärmeübertragung über Konvektion und über Wärmestrahlung.

Diese beiden Abweichungen zwischen der Temperatur des Heizelements 16 und der des Dentalrestaurationsteils 20 lassen sich empirisch und/oder rechnerisch berücksichtigen und können ebenfalls in die Regelung einfließen.

Die insofern getroffenen Maßnahmen können beispielsweise gemäß der EP 1 915 972 B1 getroffen werden, auf die hier vollinhaltlich Bezug genommen wird.

In der hier dargestellten Ausführungsform ist es vorgesehen, den Heizstrom durch die Heizstromleitung 32 in Impulsform zu leiten. In Impulspausen wird das Heizelement 16 von Messstrom durchflossen. Die Impulspause kann z.B. 10ms lang sein.

Im Verhältnis zur Impulspausenlänge ist der zeitliche Temperaturgradient gering. Eine lange Impulspause kann genutzt werden, um das Verhalten während der Pause aufzunehmen und dadurch Rückschlüsse über die Durchwärmung des Ofens zu ziehen. Eine langsame Abkühlung während der Pause bedeutet, dass der Ofen stark durchwärmt ist.

Beispielsweise kann die Messung in jeder dritten Impulspause erfolgen und zwar vorsorglich nicht unmittelbar mit Beginn der Impulspause, sondern beispielsweise bei 10% der Länge der Impulspause, wobei die Messzeit dann bei beispielsweise 20% der Impulspause abgeschlossen sein kann. Damit ist ausgeschlossen, dass sich das Heizelement 16 um mehr als einige zehn bis hundert Milligrad abkühlt und insofern das Messergebnis verfälscht ist.

Bei 10% der Impulspause sollten etwaige durch den hohen Heizstrom erzeugten physikalischen Effekte wie insbesondere Gitterschwingungen, Selbstinduktion und so weiter abgeklungen sein, so dass diese ebenfalls nicht den Messstrom beeinflussen können.

Erfindungsgemäß ist es besonders vorteilhaft vorgesehen, dass die hier dargestellte Form der Temperaturregelung während des Prozessschritts des Vortrocknens eingesetzt wird. Bei diesem Prozessschritt ist ein Wandabschnitt geöffnet und dadurch die Regelung über ein Thermoelement stark erschwert, je nach Ausführung des Ofens sogar unmöglich..

Erfindungsgemäß ist auch bei geöffnetem Wandabschnitt eine gute Temperaturregelung mit den Merkmalen von Anspruch 1 dennoch möglich, und zwar mit befriedigender Genauigkeit, und das auch noch über den gesamten Arbeitsbereich.

Es ist auch möglich, den erfindungsgemäßen Dentalofen ausschließlich oder zusätzlich als Brennofen zu verwenden, beispielsweise bei Termperaturen bis 1800°C. Auch hierbei dient die erfindungsgemäße Temperaturerfassungsvorrichtung der Regelung der Temperatur.

Ferner ist es auch möglich, zusätzlich zu der hier dargestellten Temperaturerfassung über die Temperaturerfassungsvorrichtung 22 ein Thermoelement oder ein sonstiges Temperaturerfassungselement zu verwenden. Hierbei ist es dann möglich, dass die beiden Möglichkeiten der Temperaturerfassung einander kontrollieren oder ergänzen.

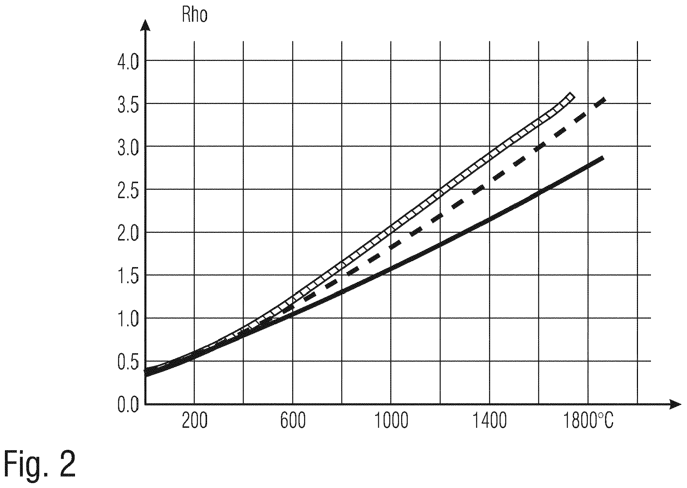

In Fig. 2 ist aufgetragen, in welcher Weise sich der spezifische Widerstand, aufgetragen über die Temperatur, nichtlinear entwickelt. Der spezifische Widerstand Rho des hier gemessenen Materials, nämlich Molybdändisilizit, nimmt zunächst weniger stark zu und dann stärker, und zwar je nach verwendetem Material unterschiedlich.

In einem beispielhaften Versuch mit einem Dentalofen, unter Verwendung von SiC als Material für das Heizelement, wurden Temperatur-Messwerte von 100°C bis 1550°C ermittelt, und zudem normierte Widerstandswerte. Bei 650°C ist der normierte Widerstandswert 1,11, also nahezu halb so groß wie bei 100°C. Der normierte Widerstandswert nimmt bis 850°C nur um weniges, nämlich um 6% zu, so dass hier ein Bereich relativ geringer Nichtlinearität oder besserer Linearität vorliegt.

Bei 1550°C ist der normierte Widerstandswert dann allerdings auf 1,47 angestiegen, so dass die erfindungsgemäße Kompensationsvorrichtung 50 die Nichtlinearität kompensieren muss.

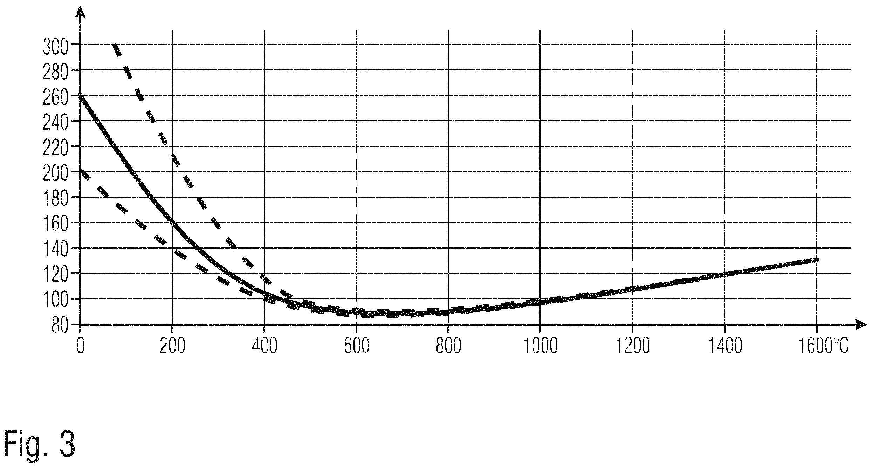

In Fig. 3 ist ebenfalls ein normierter Widerstandswert aufgetragen, hier für Siliziumcarbid. Auch hier ist ersichtlich, dass der nahezu lineare Bereich der Nichtlinearitätskurve bei weniger als 1100°C liegt, etwa im Bereich um 700°C.

Die in dem unteren Temperaturbereich ersichtliche Kurvenschar entspricht verschiedenen Formen der Siliziumcarbidverbindung, und hängt beispielsweise von dessen Reinheit ab.

Molybdändisilizid bildet bei - etwas - höheren Temperaturen eine passivierende Schicht aus Siliziumdioxid, die beispielsweise über einen Einfahrbrand erzeugt wird und dann das Siliziumcarbid schützt und dauerhaltbar macht. Idealerweise wird dieser Einfahrbrand direkt über die Eigenschaften der Heizelemente gesteuert, da bei diesem Einfahrbrand der zeitliche Ablauf der Temperatur der Heizelemente relevant ist für die Güte der $SiO_2$-Schicht.

In vorteilhafter Ausgestaltung wird nach dem Einfahrbrand und der Kalibrierung des Ofens eine Differenzkurve für die gemessene Temperatur im Verhältnis zur eingebrachten Heizleistung ermittelt und abgespeichert, beispielsweise in der Kompensationsvorrichtung 50.

Ein Testbrand wird beispielsweise automatisch oder manuell nach zum Beispiel 50 Brennzyklen durchgeführt. Wenn sich das Verhältnis zwischen eingebrachter Leistung und gemessener Temperatur um mehr als einen vorgegebenen Wert, beispielsweise 5% oder 10%, von der Referenzkurve unterscheidet, wird zur Neukalibrierung aufgefordert; wenn diese nicht mehr möglich ist, bedeutet dies, dass die Lebensdauer des Heizelements 16 und damit der weiteren Heizelemente erreicht ist.

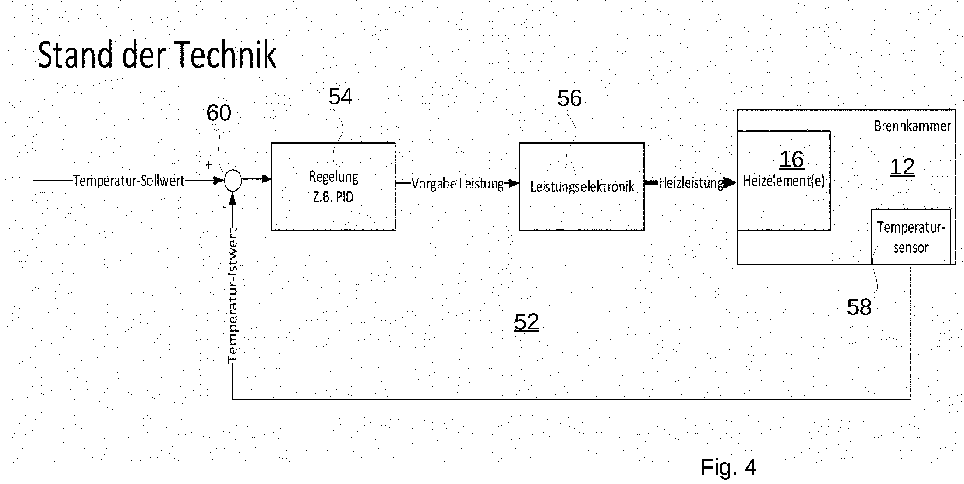

Fig. 4 zeigt einen Regelschaltkreis für einen an sich bekannten und weithin verwendeten Dentalofen. In an sich bekannter Weise wird die Temperatur als Sollwert eingestellt. Der Regelkreis 52 umfasst einen PID-Regler 54. Dieser gibt an seinem Ausgangsanschluss die Ofenleistung vor. Der Ausgangsanschluss des PID-Reglers 54 ist mit dem Eingangsanschluss der Leistungselektronik 56 verbunden, welche ihrerseits dafür sorgt, dass das Heizelement 16 oder die Heizelemente mit Heizleistung versorgt wird.

Das Heizelement 16 befindet sich in einer Brennkammer, die auch als Heitraum 12 bezeichnet wird.

In der Brennkammer 12 oder an der Wärmedämmung, die die Brennkammer 12 umgibt ist ein Temperatursensor 58 angeordnet, der letztlich die Temperatur an dieser Stelle des Heizraumes 12 misst und eigentlich die Temperatur der Dentalrestaurationen 20 erfassen soll.

Typischerweise besteht ein erheblicher Abstand zwischen der Dentalrestauration 20 und dem Temperatursensor 58. Aufgrund des lokalen Temperaturgradienten in dem Heizraum 12 vermag der Temperatursensor 58 daher die Temperatur der Dentalrestauration 20 nicht oder nicht genau erfassen.

Das Ausgangssignal des Temperatursensors 58 wird einem Vergleicher 60 zugeleitet, der die Regelung vorgibt, also, die Temperatur erhöht, wenn der Temperatur-Sollwert größer als der Temperatur-Istwert ist und letztlich die Heizleistung reduziert, wenn der Temperatur-Sollwert kleiner als der Temperatur-Istwert ist.

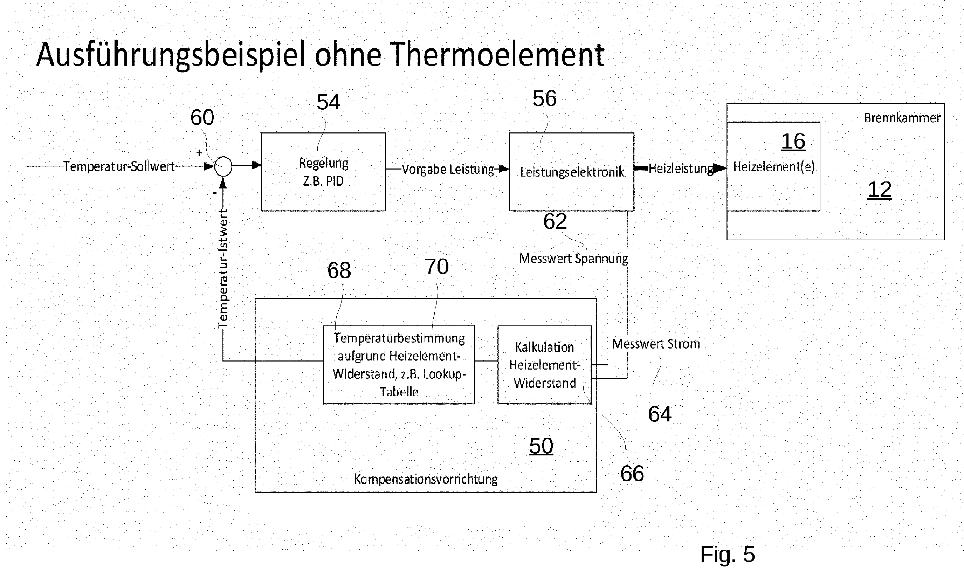

Ein Regelkreis 52 ist auch bei der erfindungsgemäßen Ausführungsform mit dem Blockschaltbild gemäß Fig. 5 vorgesehen. Dort wird ebenfalls ein PID-Regler 54 verwendet, und die Leistungselektronik 56 und das Heizelement 16 in dem Heizraum 12.

Ausgangsseitig der Leistungselektronik 56 sind jedoch Messbrücken angeordnet, die die abgegebene Spannung und den abgegebenen Strom erfassen sollen. Eine Messwert "Spannung" 62 und ein Messwert "Strom" 64 werden erfasst und verarbeitet.

Die betreffenden Messwerte können auch im Bereich der Leitungen zwischen der Leistungselektronik 56 und dem Heizelement 16 abgegriffen werden, oder auch dem Heizelement 16 benachbart.

Erfindungsgemäß werden die Messwerte "Spannung" 62 und "Strom" 64 der Kompensationsvorrichtung 50 zugeleitet. Die Kompensationsvorrichtung 50 umfasst einen Rechner 66 für die Kalkulation des Heizelemente-Widerstands, basierend auf den Messwerten für Spannung 62 und Strom 64.

Ferner umfasst die Kompensationsvorrichtung eine Temperaturbestimmungsvorrichtung 68, die zum Beispiel als Lookup-Tabelle 70 ausgebildet sein kann.

Der im Rechner 66 berechnete Heizelement-Widerstand wird der Temperaturbestimmungsvorrichtung 68 zugeleitet, so dass ausgangsseitig der Lookup-Tabelle 70 oder der Temperaturbestimmungsvorrichtung 68 die Isttemperatur als Temperatur-Istwert zur Verfügung gestellt wird. Dieser erfasste Temperatur-Istwert wird wie bei Fig. 4 dem Vergleicher 60 zugeleitet, und die Regelung erfolgt insofern in üblicher Weise.

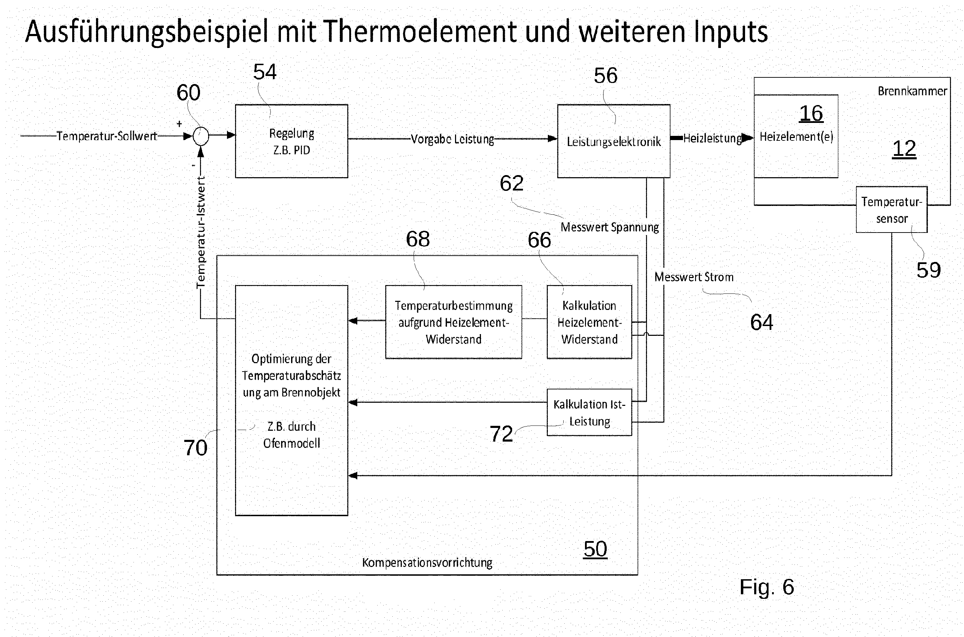

Eine weitere Ausführungsform eines erfindungsgemäßen Blockschaltbildes ist aus Fig. 6 ersichtlich. Dieses ist um den Temperatursensor aus dem Stand der Technik ergänzt und kombiniert insofern die Erfindung mit diesem.

Wie bei dem Blockschaltbild gemäß Fig. 4 ist ein Temperatursensor 59 dem Heizraum 12 zugeordnet. Wie aus Fig. 6 ersichtlich ist, ist er jedoch nur teilweise im Heizraum 12 und teilweise außerhalb angeordnet. Tatsächlich kann hier ein Temperatursensor 59 eingesetzt werden, der weniger temperaturfest ist und beispielsweise in der Mitte der Wärmedämmung des Dentalofens angebracht ist. Ein solcher Temperatursensor 59 kann beispielsweise 1/3 dessen kosten, was der Temperatursensor 58 aus Fig. 4 kostet.

Die Kombinationsvorrichtung 50 weist wie bei dem Blockschaltbild gemäß Fig. 5 einen Rechner 66 und eine Temperaturbestimmungsvorrichtung 68 auf. Diese haben die gleichen Funktionen.

Jedoch ist der Ausgangsanschluss der Temperaturbestimmungsvorrichtung 68 nicht mit dem Vergleicher 60 verbunden, sondern mit einer Optimierungsvorrichtung 70 verbunden. Die Optimierungsvorrichtung 70 dient dazu, die Temperaturabschätzung am Brennobjekt zu optimieren.

Der Ausgang des Temperatursensors 59 ist mit der Optimierungsvorrichtung 70 verbunden.

Die Optimierungsvorrichtung 70 hat in dem dargestellten Ausführungsbeispiel einen weiteren Eingangsanschluss, der mit einem Rechner 72 verbunden ist. Der Rechner 72 berechnet die Istleistung aus der Kombination des Messwertes "Spannung" 62 und des Messwertes "Strom" 64 und leitet die kalkulierte Istleistung der Optimierungsvorrichtung 70 zu.

Die Optimierungsvorrichtung 70 gibt einen Temperatur-Istwert ab, der dem Vergleicher 60 zugeleitet wird.

Die Soll-/Ist-Regelung gemäß dem Regelkreis 52 erfolgt sowohl bei der Ausführungsform gemäß Fig. 5 als auch bei derjenigen gemäß Fig. 6 zyklisch. Der Regelkreis 52 kann in konstanten Zeitabständen durchlaufen werden, wobei es auch möglich ist, bei schnellen Temperaturänderungen die Zeitabstände zu verkürzen und bei einer mehr oder weniger konstanten Temperatur die Zeitabstände zu verlängern.

Beispielsweise kann die Messung und Regelung alle 500 Millisekunden vorgenommen werden.

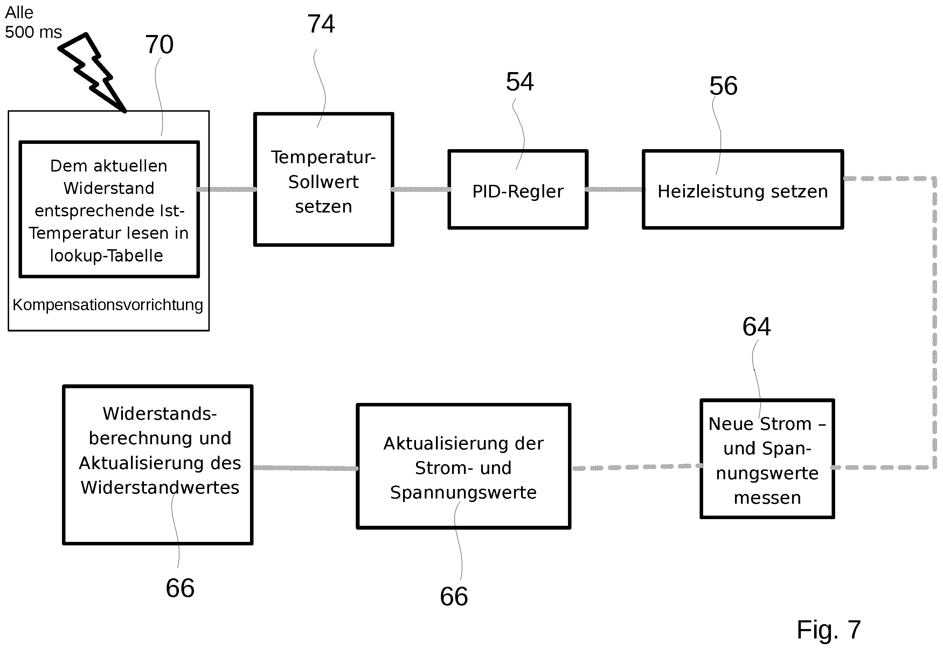

Aus Fig. 7 ist das Regelschema insofern ersichtlich. Innerhalb der Kompensationsvorrichtung 50 wird die Lookup-Tabelle 70 ausgelesen und damit die aktuelle Isttemperatur abgegeben. Die Sollwerttemperatur 72 wird gesetzt und die Regeldifferenz zwischen Sollwerttemperatur und Istwerttemperatur dem PID-Regeler 54 zugeleitet. Die Heizleistung wird über die Leistungselektronik 56 gesetzt. Neue Stromwerte 64 und Spannungswerte 62 werden basierend auf der aktuellen abgegebenen Leistung der Leistungselektronik 56 und des Heizelements 16 gemessen. Die gemessenen Werte werden im Rechner 66 ausgewertet, und es wird die Widerstandsberechnung vorgenommen und der Widerstandswert aktualisiert. Dies erfolgt ebenfalls im Rechner 66.

Der ermittelte neue Widerstandswert wird der Lookup-Tabelle 70 zugeleitet, und in weiteren 500 Millisekunden wird die Regelstrecke erneut durchlaufen.

Die Lookup-Tabelle als wichtiger Teil der Kompensationsvorrichtung 50 ist vorab empirisch festgelegt und ermöglicht eine recht genaue Temperaturbestimmung Nachfolgend ist eine auszugsweise Lookup-Tabelle 70 dargestellt.

Lookup-Tabelle

| Widerstand 4 Heizelemente in Mikroohm | Temperatur Heizelemente in Grad C |
|---|---|
| 26500 | 100,6 |
| 26600 | 101,8 |
| 26700 | 103,0 |
| 26800 | 104,2 |
| 26900 | 105,3 |
| 27000 | 106,5 |
| 160000 | 1214,6 |
| 160100 | 1215,3 |
| 160200 | 1216,0 |
| 160300 | 1216,7 |
| 160400 | 1217,3 |
| 212700 | 1600,5 |
| 212800 | 1601,3 |
| 212900 | 1602,1 |
| 213000 | 1602,9 |
| 213100 | 1603,7 |
| 213200 | 1604,6 |

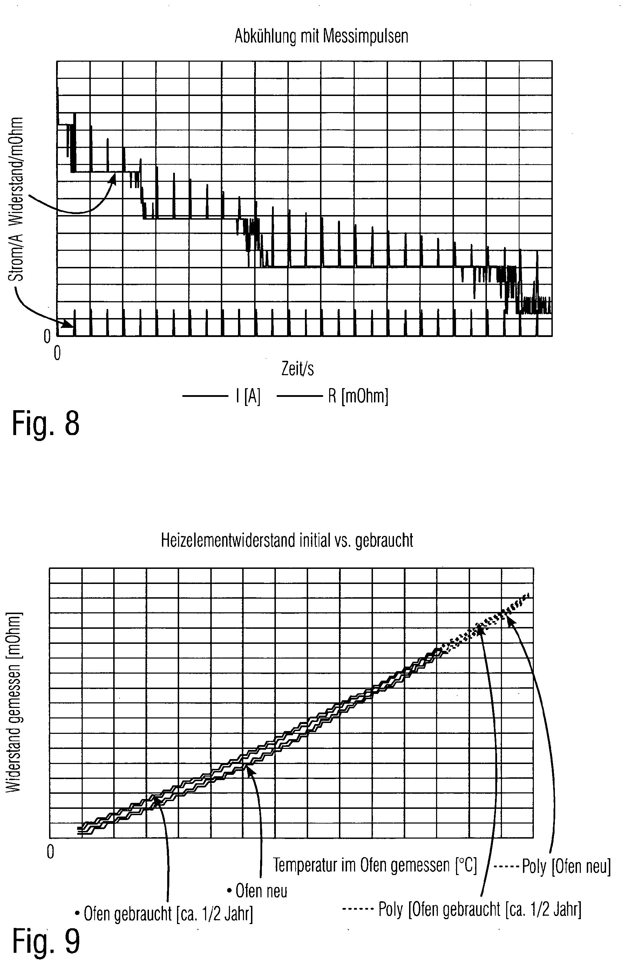

Aus Fig. 8 ist ein Beispiel der erfindungsgemäßen Temperaturmessung bei der Abkühlung ersichtlich, Es ist ersichtlich, dass regelmäßig in ein heizstromloses Heizelement ein Stromimpuls eingeprägt wird. Der zugehörige Widerstandswert wird gemessen.

Nach Beendigung des aktiven Brennprozesses wird also ein Stromimpuls eingeprägt, um den Widerstand der Heizelemente und so die Temperatur in der Kammer zu messen. Während der Ofen eine definierte Schwelltemperatur noch nicht unterschritten hat, sind die Lüfter zur Kühlung eingestellt und es kann kein neues Programm gestartet werden.

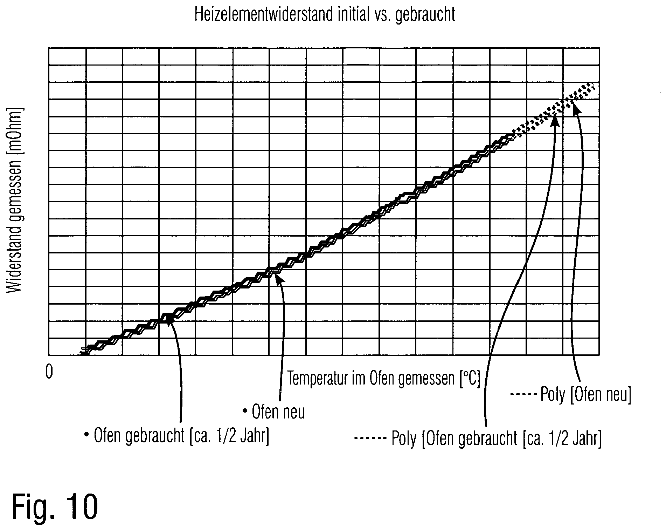

Fig. 9 und 10 zeigen die Kompensation des zunehmenden Widerstands der Anschlüsse des Heizelements. Durch Alterung oder sonstige Effekte - z.B. mechanische Belastung kann sich der Widerstand erhöhen.

Die wird kompensiert, indem periodisch (z.B. alle 3 Monate) der Widerstand des Heizelements gemessen und mit dem eines neuen Heizelements verglichen wird. Aus der Differenz wird ein Offset berechnet. Gemäß Fig. 9 ist dieser Offset temperaturabhängig. Er wird in der Kompensationsvorrichtung je abgespeichert und damit bei der Erfassung der tatsächlichen Temperatur berücksichtigt.

Fig. 10 zeigt, dass insofern eine nahezu vollständige Kompensation auch von Alterungseffekten möglich ist.

Bei der Einführung eines Offsets, welcher den aktuellen Übergangswiderstand der Anschlusstechnik abschätzt, kann die folgende Funktion verwendet werden::

$$T\_Heizelemente = f(R\_gemessen - R\_Offset)$$

Die Funktion f kann wiederum als Lookup-Tabelle hinterlegt sein.

Durch Kompensation des durch die Alterung (v.a. der Anschlusstechnik) vergrösserten Widerstandes durch ein Offset liegen die Kurven gebraucht und alt wieder aufeinander. Natürlich kann auch eine komplexere oder kompliziertere Kompensation als ein einfaches Offset verwendet werden, um z.B. temperaturabhängige Effekte etc. zu kompensieren.

## Patentansprüche

1. Dentalofen, insbesondere auch zur Vortrocknung von Dentalrestaurationsteilen,

   - mit mindestens einem elektrischen Heizelement (16), das sich benachbart einem Heizraum (12) erstreckt und von einer Heizungssteuerung (44) angesteuert ist,
   - welche Heizungssteuerung (44) die Temperatur in dem Heizraum (12) regelt und hierzu einen Ausgangsanschluss für das mindestens eine Heizelement (16) und einen Eingangsanschluss für die Erfassung der Temperatur des Heizelements (16) aufweist,
   - welcher mit einer Temperaturerfassungsvorrichtung (22) elektrisch verbunden ist, wobei die Temperaturerfassungsvorrichtung (22) das Heizelement (16) aufweist, **dadurch gekennzeichnet,**
   - **dass** die Temperaturerfassungsvorrichtung (22) eine Kompensationsvorrichtung (50) aufweist, mit welcher Nichtlinearitäten, also Abweichungen von der Proportionalität der Widerstandszunahme zu der Temperaturzunahme, kompensierbar sind, und
   - **dass** die Heizungssteuerung (44) ihren Ausgangsanschluss basierend auf dem erfassten Widerstand mindestens eines Teiles mindestens eines Heizelementes (16) und basierend auf der Kompensationsvorrichtung (50) steuert.

2. Dentalofen nach Anspruch 1, **dadurch gekennzeichnet, dass** die Temperaturerfassungsvorrichtung (22) die aktuelle Temperatur des Heizelements (16) durch Ermittlung dessen Widerstands, zu dem auch Scheinwiderstände, also induktive und/oder kapazitive Widerstände, oder hierzu gleichwirkende Parameter, gehören, erfasst.

3. Dentalofen nach einem der vorhergehenden Ansprüche, **dadurch gekennzeichnet, dass** die Heizungssteuerung (44) mindestens zwei Regelkreise aufweist oder in diesen ist, von denen ein innererer in an sich bekannter Weise die abgegebene Heizleistung, insbesondere basierend auf einem Strom/Spannungs-Kennlinienfeld, regelt und von denen ein äußerer die Temperaturerfassungsvorrichtung (22) einbezieht, die basierend auf einem einem Temperaturwert entsprechenden, gemessenen Widerstandswert eines Heizelements (16) die Temperatur im Heizraum (12) steuert.

4. Dentalofen nach einem der vorhergehenden Ansprüche, **dadurch gekennzeichnet, dass** die Heizungssteuerung (44) die Heizleistung gepulst abgibt und die Temperaturerfassungsvorrichtung (22) den Widerstand des Heizelements (16) und damit indirekt die Temperatur im Heizraum (12) in Impulspausen der Heizleistung misst, insbesondere gepulst mit einer Pulslänge von 10 msec bis 20 sec und einer Pausenlänge zwischen 2 msec und 10 sec abgibt.

5. Dentalofen nach einem der vorhergehenden Ansprüche, **dadurch gekennzeichnet, dass** die Temperaturerfassungsvorrichtung (22) den Widerstand des Heizelements (16) und damit indirekt die Temperatur im Heizraum (12), insbesondere beim Beginn von Impulspausen der Heizleistung, misst, insbesondere in einem Messzeitraum, der eine Länge von weniger als 10s und mehr als 10 ms hat

6. Dentalofen nach einem der vorhergehenden Ansprüche, **dadurch gekennzeichnet, dass** das Heizelement (16) mindestens teilweise aus MoSi oder aus SiC oder aus FeCrAl-Verbindungen resp. FeCrNi-Verbindungen, oder als sonstiges metallkeramisches Heizelement, ausgebildet ist und bei Raumtemperatur einen Widerstand von weniger als 60 Ohm, insbesondere weniger als 10 Ohm hat.

7. Dentalofen nach einem der vorhergehenden Ansprüche, **dadurch gekennzeichnet, dass** die Temperaturerfassungsvorrichtung (22) einen Messstrom abgibt, und einen Spannungsabfall über das Heizelement (16), oder einen Teil dessen oder alle Heizelemente (16,18) als Messspannung misst, wobei insbesondere das Produkt aus Messstrom und Messspannung eine Messleistung von weniger als 10 % der maximalen elektrischen Heizleistung des Dentalofens, insbesondere weniger als 1 % dieser, ergibt, oder der Messstrom dem Heizstrom resp. die Messspannung der Heizspannung entspricht.

8. Dentalofen nach einem der vorhergehenden Ansprüche, **dadurch gekennzeichnet, dass** die Temperaturerfassungsvorrichtung (22) in der Kompensationsvorrichtung (50) eine Lookup-Tabelle aufweist, in welcher in einem Kalibrierschritt erfasste Nichtlinearitäten des Heizelements (16) abgelegt sind, oder eine Funktion ermittelt, welche den Zusammenhang von Widerstand und Temperatur im Heizraum (12) darstellt, und insbesondere, dass der Kalibrierschritt der Temperaturerfassungsvorrichtung (22) Temperaturen zwischen Raumtemperatur und 1900 Grad über den gesamten Temperaturbereich abdeckt.

9. Dentalofen nach einem der vorhergehenden Ansprüche, **dadurch gekennzeichnet, dass** die Temperaturerfassungsvorrichtung (22), insbesondere bei einem Einfahrbrand und/oder einem Regenerationsbrand der Heizelemente (16,18) der Heizvorrichtung (32), ohne zusätzlichen Temperatursensor arbeitet.

10. Dentalofen nach einem der vorhergehenden Ansprüche, **dadurch gekennzeichnet, dass** die Temperaturerfassungsvorrichtung (22) einen Prüfmodus aufweist, in welchem sie den Widerstandswert des Heizelements (16) bei einem vorgegebenen Zustand des Ofens erfasst und die Temperaturerfassungsvorrichtung (22) bei Abweichung des gemessenen Widerstandswerts von einem bei der Kalibrierung ermittelten Widerstandswert um mehr als eine vorgegebene Toleranz von z.B. 10%, die Alterung des Heizelements (16) oder die Notwendigkeit einer Neukalibrierung/eines Service des Ofens feststellt.

11. Dentalofen nach einem der vorhergehenden Ansprüche, **dadurch gekennzeichnet, dass** die Temperaturerfassungsvorrichtung (22) den Messstrom durch das Heizelement (16), und damit den unkompensierten Ausgangswert für die Temperaturmessung, indirekt erfasst, insbesondere über ein Ausgangssignal des Leistungsnetzteils für das Heizelement (16), welches Ausgangssignal einen Parameter insbesondere des Leistungsnetzteiles, wie dessen Verlustleistung, wiedergibt.

12. Verfahren zum Betrieb eines Dentalofens, mit mindestens einem elektrischen Heizelement (16), das sich benachbart einem Heizraum (12) erstreckt und von einer Heizungssteuerung (44) angesteuert wird,

- welche Heizungssteuerung (44) die Temperatur in dem Heizraum (12) regelt und eine Temperaturerfassungsvorrichtung (22) aufweist, **dadurch gekennzeichnet,**
- **dass** die Temperaturerfassungsvorrichtung (22) den Widerstand mindestens eines Teiles mindestens eines Heizelementes (16) erfasst und eine Kompensationsvorrichtung (50) aufweist,
- **dass** in der Kompensationsvorrichtung (50) Abweichungen von der Proportionalität der Widerstandzunahme des Heizelements (16) mit der Temperaturzunahme des Heizelements (16), also Nichtlinearitäten, abgespeichert werden
- **dass** die Heizungssteuerung (44) die Temperatur des Dentalofens basierend auf dem erfassten Widerstand mindestens eines Teiles mindestens eines Heizelementes (16) und basierend auf der Kompensationsvorrichtung (50) steuert.

13. Verfahren nach Anspruch 12, **dadurch gekennzeichnet, dass** vorab ein Grenzwert für die Temperatur des Dentalofens festgelegt wird, bei welcher ein Brennprogramm gestartet werden kann, und dass die aktuelle Temperatur des Heizelements (16) gemäß der Temperaturerfassungsvorrichtung (22) von der Heizungssteuerung (44) mit der Grenztemperatur verglichen wird und das Brennprogramm gestartet wird, wenn der Grenzwert erreicht ist.

**14.** Verfahren nach Anspruch 12 oder 13, **dadurch gekennzeichnet, dass** für die Erfassung der Temperatur des Heizelements (16) kurze Stromimpulse, also soche mit einer Einschaltdauer von weniger als 20%, insbesondere von weniger als 7%, durch das Heizelement geschickt werden und während dieser die Temperaturerfassungsvorrichtung (22) den Widerstand mind. eines Teils des Heizelements (16) misst.

**15.** Verfahren nch einem der Ansprüche 12 bis 14, **dadurch gekennzeichnet, dass** der Widerstand eines neu eingebauten Heizelements (16) erfasst und abgespeichert wird, und dass die Erfassung des Widerstands des Heizelements (16) in Zeitabständen von mind. einer Woche, insbesondere mind. 3 Monaten, wiederholt wird, und der gemessene Unterschied als die Alterung des Heizelements und/oder seiner Anschlüsse wiedergebender Offset gespeichert und bei der Temperaturerfassung mit verwendet wird.

**Claims**

**1.** A dental furnace, in particular also for pre-drying dental restoration parts,

- comprising at least one electric heating element (16) which extends adjacent to a heating chamber (12) and is driven by a heating controller (44),
- said heating controller (44) regulating the temperature in the heating chamber (12) and, for this purpose, comprising an output connection for the at least one heating element (16) and an input connection for detecting the temperature of the heating element (16),
- being electrically connected to a temperature detection device (22), the temperature detection device (22) comprising the heating element (16), **characterized in that**
- the temperature detection device (22) comprises a compensation device (50) with which nonlinearities, i.e. deviations from the proportionality of the increase in resistance to the increase in temperature can be compensated for, and
- the heating controller (44) controls its output connection based on the detected resistance of at least part of at least one heating element (16) and based on the compensation device (50).

**2.** The dental furnace according to claim 1, **characterized in that** the temperature detection device (22) detects the current temperature of the heating element (16) by determining its resistance, which also includes impedance resistances, i.e. inductive and/or capacitive resistances, or parameters acting in the same way.

**3.** The dental furnace according to any one of the preceding claims, **characterized in that** the heating controller (44) comprises or is in at least two control loops, of which an internal one regulates the heat output in a manner known per se, in particular based on a current/voltage characteristic curve, and of which an external one includes the temperature detection device (22) which controls the temperature in the heating chamber (12) based on a measured resistance value of a heating element (16) corresponding to a temperature value.

**4.** The dental furnace according to any one of the preceding claims, **characterized in that** the heating controller (44) outputs the heating power in pulses and the temperature detection device (22) measures the resistance of the heating element (16) and thus indirectly the temperature in the heating chamber (12) in pulse pauses of the heating power, in particular in pulses with a pulse length of 10 msec to 20 sec and a pause length between 2 msec and 10 sec.

**5.** The dental furnace according to any one of the preceding claims, **characterized in that** the temperature detection device (22) measures the resistance of the heating element (16) and thus indirectly the temperature in the heating chamber (12), in particular at the beginning of pulse pauses of the heating power, in particular in a measurement period which has a length of less than 10s and more than 10 ms.

**6.** The dental furnace according to any one of the preceding claims, **characterized in that** the heating element (16) is configured at least partially from MoSi or from SiC or from FeCrAl compounds or FeCrNi compounds, or as another metal-ceramic heating element, and has a resistance of less than 60 ohms, in particular less than 10 ohms, at room temperature.

**7.** The dental furnace according to any one of the preceding claims, **characterized in that** the temperature detection device (22) delivers a measuring current and measures a voltage drop across the heating element (16) or part thereof or all heating elements (16, 18) as measuring voltage, wherein in particular the product of the measuring current and the measuring voltage results in a measuring power of less than 10% of the maximum electrical heating power of the dental furnace, in particular less than 1% thereof, or the measuring current corresponds to the heating current or the measuring voltage to the heating voltage.

8. The dental furnace according to any one of the preceding claims, **characterized in that** the temperature detection device (22) in the compensation device (50) has a lookup table in which nonlinearities of the heating element (16) detected in a calibration step are stored, or determines a function which represents the relationship between resistance and temperature in the heating chamber (12), and in particular that the calibration step of the temperature detection device (22) covers temperatures between room temperature and 1900 degrees over the entire temperature range.

9. The dental furnace according to any one of the preceding claims, **characterized in that** the temperature detection device (22), in particular in the case of a run-in firing and/or a regeneration firing of the heating elements (16, 18) of the heating device (32), operates without an additional temperature sensor.

10. The dental furnace according to any one of the preceding claims, **characterized in that** the temperature detection device (22) has a test mode in which it detects the resistance value of the heating element (16) at a predetermined state of the furnace and the temperature detection device (22) determines the ageing of the heating element (16) or the need of a recalibration/service of the furnace when the measured resistance value deviates from a resistance value determined during calibration by more than a predetermined tolerance of e.g. 10%.

11. The dental furnace according to any one of the preceding claims, **characterized in that** the temperature detection device (22) indirectly detects the measuring current through the heating element (16), and thus the uncompensated output value for the temperature measurement, in particular via an output signal of the power supply unit for the heating element (16), which output signal represents a parameter, in particular of the power supply unit, such as its power loss.

12. A method of operating a dental furnace, comprising at least one electric heating element (16) which extends adjacent to a heating chamber (12) and is driven by a heating controller (44),

    - said heating controller (44) regulating the temperature in the heating chamber (12) and comprising a temperature detection device (22),
    **characterized in that**
    - the temperature detection device (22) detects the resistance of at least part of at least one heating element (16) and comprises a compensation device (50),
    - the compensation device (50) stores deviations from the proportionality of the increase in resistance of the heating element (16) to the increase in temperature of the heating element (16), i.e. nonlinearities,
    - the heating controller (44) controls the temperature of the dental furnace based on the detected resistance of at least part of at least one heating element (16) and based on the compensation device (50).

13. The method according to claim 12, **characterized in that** a threshold value for the temperature of the dental furnace is determined in advance, at which temperature a firing program can be started, and **in that** the current temperature of the heating element (16) according to the temperature detection device (22) of the heating controller (44) is compared to the threshold temperature and the firing program is started when the threshold value is reached.

14. The method according to claim 12 or 13, **characterized in that** short current pulses, i.e. current pulses having a switch-on duration of less than 20%, in particular of less than 7%, are sent through the heating element for detecting the temperature of the heating element (16), and during this duration the temperature detection device (22) measures the resistance of at least part of the heating element (16).

15. The method according to any one of claims 12 to 14, **characterized in that** the resistance of a newly installed heating element (16) is detected and stored, and **in that** the detection of the resistance of the heating element (16) is repeated at time intervals of at least one week, in particular at least 3 months, and the measured difference is stored as offset representing the ageing of the heating element and/or its connections and is also used when detecting the temperature.

**Revendications**

1. Four dentaire, en particulier aussi pour le pré-séchage des pièces de restauration dentaire,

   - avec au moins un élément chauffant électrique (16) qui s'étend à côté d'un espace de chauffage (12) et est commandé par un système de commande de chauffage (44),
   - où ledit système de commande de chauffage (44) régule la température dans l'espace de chauffage (12) et présente à cet effet un raccord de sortie pour au moins un élément chauffant (16) et un raccord d'entrée pour détecter la température de l'élément chauffant (16),
   - qui est relié électriquement à un dispositif de détection de température (22), où le dispositif de détection de température (22) présente l'élément chauffant (16), **caractérisé en ce que**
   - le dispositif de détection de température (22) présente un dispositif de compensation (50) avec lequel les non-linéarités, c'est-à-dire les écarts par rapport à la proportionnalité de l'augmentation de la résistance à l'augmentation de la température, peuvent être compensés, et
   - **en ce que** le système de commande de chauffage (44) commande sa connexion de sortie en fonction de la résistance détectée d'au moins une partie d'au moins un élément chauffant (16) et en fonction du dispositif de compensation (50).

2. Four dentaire selon la revendication 1, **caractérisé en ce que** le dispositif de détection de température (22) détecte la température actuelle de l'élément chauffant (16) en déterminant sa résistance, ce qui comprend également des résistances apparentes, c'est-à-dire des résistances inductives et/ou capacitives, ou des paramètres ayant le même effet.

3. Four dentaire selon l'une des revendications précédentes, **caractérisé en ce que** le système de commande de chauffage (44) comporte ou est compris dans au moins deux circuits de commande, dont l'un interne régule de manière connue en soi la puissance de chauffage délivrée, en particulier sur la base d'un champ de caractéristiques courant/tension, et dont l'un externe comprend le dispositif de détection de température (22) qui, sur la base d'une valeur de résistance mesurée d'un élément chauffant (16) correspondant à une valeur de température, commande la température dans l'espace de chauffage (12).

4. Four dentaire selon l'une des revendications précédentes, **caractérisé en ce que** la commande de chauffage (44) émet la puissance de chauffage par impulsions et **en ce que** le dispositif de détection de température (22) mesure la résistance de l'élément chauffant (16) et donc indirectement la température dans l'espace de chauffage (12) lors des pauses d'impulsion de la puissance de chauffage, en particulier délivre par impulsions avec une longueur d'impulsion comprise entre 10 msec et 20 sec et une durée de pause comprise entre 2 msec et 10 sec.

5. Four dentaire selon l'une des revendications précédentes, **caractérisé en ce que** le dispositif de détection de température (22) mesure la résistance de l'élément chauffant (16) et donc indirectement la température dans l'espace de chauffage (12), en particulier au début des pauses d'impulsion de la puissance de chauffage, en particulier dans une période de mesure d'une durée inférieure à 10s et supérieure à 10 ms.

6. Four dentaire selon l'une des revendications précédentes, **caractérisé en ce que** l'élément chauffant (16) est formé au moins partiellement de MoSi ou de SiC ou de composés FeCrAl ou de composés FeCrNi, ou en tant qu'autre élément chauffant céramo-métallique, et présente une résistance inférieure à 60 ohms, en particulier inférieure à 10 ohms, à température ambiante.

7. Four dentaire selon l'une des revendications précédentes, **caractérisé en ce que** le dispositif de détection de température (22) émet un courant de mesure, et mesure une chute de tension sur l'élément chauffant (16), ou sur une partie ou la totalité des éléments chauffants (16, 18) sous forme de tension de mesure, où en particulier le produit du courant de mesure et de la tension de mesure donne une puissance de mesure inférieur à 10 % de la puissance de chauffage électrique maximale du four dentaire, en particulier inférieur à 1 % de celle-ci, ou le courant de mesure correspond au courant de chauffage ou à la tension de mesure de la tension de chauffage.

8. Four dentaire selon l'une des revendications précédentes, **caractérisé en ce que** le dispositif de détection de température (22) présente une table de consultation dans le dispositif de compensation (50) dans laquelle les non-linéarités de l'élément chauffant (16) détectées dans une étape d'étalonnage sont stockées, ou détermine une fonction qui représente la relation entre la résistance et la température dans l'espace de chauffage (12), et en particulier **en ce que** l'étape d'étalonnage du dispositif de détection de température (22) couvre des températures comprises entre la température ambiante et 1900 degrés sur toute la plage de températures.

9. Four dentaire selon l'une des revendications précédentes, **caractérisé en ce que** le dispositif de détection de température (22) fonctionne sans capteur de température supplémentaire, en particulier lors d'une cuisson de rodage et/ou d'une cuisson de régénération des éléments chauffants (16, 18) du dispositif de chauffage (32).

10. Four dentaire selon l'une des revendications précédentes, **caractérisé en ce que** le dispositif de détection de température (22) présente un mode de vérification dans lequel il détecte la valeur de résistance de l'élément chauffant (16) dans un état prédéterminé du four et le dispositif de détection de température (22) si la valeur de résistance mesurée s'écarte d'une valeur de résistance déterminée lors de l'étalonnage de plus d'une tolérance spécifiée, par exemple 10 %, détermine le vieillissement de l'élément chauffant (16) ou la nécessité d'un réétalonnage ou d'une révision du four.

11. Four dentaire selon l'une des revendications précédentes, **caractérisé en ce que** le dispositif de détection de température (22) saisit indirectement le courant de mesure à travers l'élément chauffant (16), et donc la valeur de sortie non compensée pour la mesure de température, en particulier par un signal de sortie du bloc d'alimentation de l'élément chauffant (16), lequel signal de sortie reproduit un paramètre en particulier du bloc d'alimentation, tel que sa dissipation de puissance.

12. Procédé pour faire fonctionner un four dentaire avec au moins un élément chauffant électrique (16) qui s'étend à côté d'une chambre de chauffage (12) et qui est commandé par un système de commande de chauffage (44),

    - dont la commande de chauffage (44) régule la température dans l'espace de chauffage (12) et présente un dispositif de détection de température (22), **caractérisé en ce que** :

        - le dispositif de détection de température (22) détecte la résistance d'au moins une partie d'au moins un élément chauffant (16) et présente un dispositif de compensation (50),
        - les écarts par rapport à la proportionnalité de l'augmentation de la résistance de l'élément chauffant (16) avec l'augmentation de température de l'élément chauffant (16), c'est-à-dire les non-linéarités, sont stockés dans le dispositif de compensation (50)
        - la commande de chauffage (44) commande la température du four dentaire en fonction de la résistance détectée d'au moins une partie d'au moins un élément chauffant (16) et en fonction du dispositif de compensation (50).

13. Procédé selon la revendication 12, **caractérisé en ce qu'**une valeur limite pour la température du four dentaire à laquelle un programme de cuisson peut être déclenché est spécifiée à l'avance, et **en ce que** la température actuelle de l'élément chauffant (16) selon le dispositif de détection de température (22) est comparée par le système de commande de chauffage (44) avec la température limite et que le programme de cuisson est lancé lorsque la valeur limite est atteinte.

14. Procédé selon la revendication 12 ou 13, **caractérisé en ce que**, pour la détection de la température de l'élément chauffant (16), de courtes impulsions de courant, c'est-à-dire celles ayant un temps de fonctionnement inférieur à 20 %, en particulier inférieur à 7 %, sont envoyées à travers l'élément chauffant et pendant celles-ci le dispositif de détection de température (22) mesure la résistance d'au moins une partie de l'élément chauffant (16).

15. Procédé selon l'une des revendications 12 à 14, **caractérisé en ce que** la résistance d'un élément chauffant (16) nouvellement installé est saisie et stockée, et **en ce que** la détection de la résistance de l'élément chauffant (16) est répétée à des intervalles d'au moins une semaine, en particulier au moins 3 mois, et la différence mesurée est stockée sous forme de décalage reflétant le vieillissement de l'élément chauffant et/ou de ses raccords et est utilisée lors de la détection de la température.

Fig. 1

EP 3 994 406 B1

Fig. 2

Fig. 3

## Stand der Technik

Fig. 4

EP 3 994 406 B1

# Ausführungsbeispiel ohne Thermoelement

Fig. 5

EP 3 994 406 B1

# Ausführungsbeispiel mit Thermoelement und weiteren Inputs

Fig. 6

EP 3 994 406 B1

EP 3 994 406 B1

Alle
500 ms

**70**

| Dem aktuellen Widerstand entsprechende Ist-Temperatur lesen in lookup-Tabelle |
| :---: |

Kompensationsvorrichtung

**74**

| Temperatur-Sollwert setzen |
| :---: |

**54**

| PID-Regler |
| :---: |

**56**

| Heizleistung setzen |
| :---: |

**64**

| Neue Strom – und Span-nungswerte messen |
| :---: |

| Aktualisierung der Strom- und Spannungswerte |
| :---: |

**66**

| Widerstands-berechnung und Aktualisierung des Widerstandwertes |
| :---: |

**66**

Fig. 7

Abkühlung mit Messimpulsen

Strom/A  Widerstand/mOhm

Zeit/s

—— I [A]  —— R [mOhm]

# Fig. 8

Heizelementwiderstand initial vs. gebraucht

Widerstand gemessen [mOhm]

Temperatur im Ofen gemessen [°C]    ----- Poly [Ofen neu]

• Ofen neu

• Ofen gebraucht [ca. 1/2 Jahr]    ----- Poly [Ofen gebraucht [ca. 1/2 Jahr]

# Fig. 9

Heizelementwiderstand initial vs. gebraucht

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3131217 A1
- DE 102016206447 A1
- EP 3338767 A1
- EP 1915972 B1